(19) **Europäisches Patentamt**
**European Patent Office**
**Office européen des brevets**

(11) **EP 2 307 579 B1**

(12) **EUROPÄISCHE PATENTSCHRIFT**

(45) Veröffentlichungstag und Bekanntmachung des Hinweises auf die Patenterteilung:
**26.09.2012 Patentblatt 2012/39**

(51) Int Cl.:
*C21C 7/00* (2006.01)  *C21C 5/52* (2006.01)
*C21C 5/54* (2006.01)

(21) Anmeldenummer: **09775939.3**

(22) Anmeldetag: **03.07.2009**

(86) Internationale Anmeldenummer:
**PCT/DE2009/000951**

(87) Internationale Veröffentlichungsnummer:
**WO 2010/003401 (14.01.2010 Gazette 2010/02)**

(54) **VERFAHREN ZUR ERZEUGUNG VON SCHAUMSCHLACKE**

PROCESS FOR PRODUCING FOAMED SLAG

PROCÉDÉ DE FABRICATION D UN LAITIER EXPANSÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **07.07.2008 DE 102008032975**

(43) Veröffentlichungstag der Anmeldung:
**13.04.2011 Patentblatt 2011/15**

(73) Patentinhaber: **SMS Siemag Aktiengesellschaft**
**40237 Düsseldorf (DE)**

(72) Erfinder:
• **REICHEL, Johann**
**40489 Düsseldorf (DE)**

• **ROSE, Lutz**
**47259 Duisburg (DE)**

(74) Vertreter: **Klüppel, Walter**
**Hemmerich & Kollegen**
**Patentanwälte**
**Hammerstraße 2**
**57072 Siegen (DE)**

(56) Entgegenhaltungen:
**WO-A-2004/104232 WO-A-2007/087979**
**WO-A-2008/095575**

**Beschreibung**

Die Erfindung betrifft ein Verfahren zur Erzeugung von Schaumschlacke.

Bei der Stahlherstellung in einem Elektrolichtbogenofen ist das Schäumen der Schlacke einer der entscheidenden Verfahrensabläufe, die sich auf die Erhöhung der Effektivität der Stahlproduktion und eine Verringerung der Produktionskosten auswirken.

Bei der Herstellung von Standard - Kohlenstoffstählen ist dies eine allgemein angewandte Methode.

Anders sieht es aber aus, wenn dieses Schäumen auf Stähle mit hohem Chromgehalt angewandt werden soll, weil die signifikante Aufnahme von Chromoxid durch die Schlacke Probleme aufwirft. Dies ergibt sich aus den physikalisch-chemischen Eigenschaften von Schlacken mit hohem Chromoxidgehalt. Diese erlauben kein Schäumen mit den herkömmlichen Methoden, beispielsweise beim Injizieren von pulverförmigen Kohlenstoff in Trägermaterialien mit Sauerstoff in das Metallbad oder die Schlacke.

Es sind zwar Methoden zum Aufschäumen von Schlacken mit hohen Chromoxid-gehalt bekannt, wie in EP 1 629 126 die aber alle nicht befriedigend sind.

Aufgabe der Erfindung ist es daher, ein Verfahren bzw. Material bereit zustellen, mit dem das Schäumen einer Schlacke mit hohem Chromoxid Gehalt erreicht werden kann.

Gelöst wird diese Aufgabe erfindungsgemäß mit den Merkmalen des Patentanspruchs 1. Vorzugsweise Ausgestaltungen ergeben sich aus den Unteransprüchen.

Kern der Erfindung ist dabei, dass das Material Eisenoxid-Träger, Kohlenstoffträger, hoch Kohlenstoff haltiges Ferrochrom und/oder Schrott oder Nickeloxid (außer ferritischen Stahl) als Beimischung sowie Kalkstein und eventuell zusätzlich Flussspat, Binder wie Melasse und/oder Zement und zusätzlicher Gaslieferer für den Schäumprozess enthält. Dieses Material soll in Brikettform oder als Pellets mit unterschiedlicher Größe vorliegen.

Die Anwendung des Schäumens der Schlacke bei der EAF Metallurgie ergibt eine Reihe von Vorteilen wie eine Verbesserung des thermischen Wirkungsgrades des Ofens aufgrund der geringen Wärmeleitfähigkeit des Schaumes, des geringeren Verbrauchs an Feuerfestmaterial und Elektroden, der Stabilisierung des Lichtbogens und des Geräuschpegels.

Um ein effektives Schäumen zu erreichen, muss eine hohe Gasentstehung an der Phasen-Grenze Metall-Schlacke bewirkt werden.

Die dominierenden Faktoren sind dabei als Schaum erzeugendes Gas CO sowie $CO_2$. Diese Gase entstehen bei der Eisenoxid- und Chromoxid-Reduktion und der thermischen Zersetzung des Kalksteins in folgender Weise:

$$Fe_2O_3 + 3C = 2Fe + 3CO \qquad (1)$$

$$FeO + C = Fe + CO \qquad (2)$$

$$Cr_2O_3 + 3C = 3CO + 2Cr \qquad (3)$$

$$CrO + C = Cr + CO \qquad (4)$$

$$CaCO_3 = CaO + CO_2 \qquad (5)$$

Bei diesen Reaktionen ist der Reduktionsgrad des Eisenoxids durch den Kohlenstoff sehr hoch, während die Reduktion von Chromoxid durch den Kohlenstoff weniger effektiv ist. Es sei erwähnt, dass die Schlacken bei der Herstellung von rostfreiem Stahl sehr wenig Eisenoxide enthalten aber viel Chromoxide, so dass der geringe Wirkungsgrad der CO Erzeugung in derartigen Schlacken verständlich ist. Eine effektivere Gaserzeugung mag erreichbar sein durch die gezielte Zugabe von synthetischen Materialien, wie Zunder und Kalkstein.

Für die Schaumentwicklung spielt die spez.Dichte der Zusätze eine wichtige Rolle, und zwar verglichen mit der der Schlacke bzw. des Metalls. Sie trägt dazu bei, die Gaserzeugungsreaktion an die Schlacke/Metall-Grenzschicht zu bringen, so dass die Schaumbildung wirkungsvoller und besser kontrollierbar wird. Beeinflussbar ist die Dichte durch die geeignete Auswahl von sehr dichten Materialien (Metallen) so genannten Ballastmaterialien wie ferritischer Schrott und/oder Ferrochrom sowie weniger dichten Materialien (Oxiden).

Die Hauptkomponente bei den Schaumbildnern ist das Eisenoxid, $Fe_2O_3$, mit einem Zusatz von Kohlenstoff als Reduktionsmittel. Dabei läuft folgende Reaktion ab:

$$Fe_2O_3 + 3\ C = 2\ Fe + 3\ CO \qquad (6)$$

wobei das Schaumgemisch aus $Fe_2O_3$ und Graphit, 18,37 % Graphit und als Rest 81,63 % $Fe_2O_3$ enthält.

Die Zusammensetzung wird durch Ferrochrom (FeCr) mit hohem Chromgehalt, ferritischem Schrott sowie Kalkstein $CaCO_3$ vervollständigt werden.

Im Fall von Schlacken der austenitischen Stähle kann auch Nickeloxid zugesetzt werden.

Ferrochrom und ferritischer Schrott machen , aufgrund der hohen spez. Dichte - den schaumbildenden Zusatz schwerer. Die spezifische Dichte liegt dadurch zwischen den spezifischen Dichten der Schlacke und des Metalls laut:

$$\rho_{Schlacke} \quad < \quad \rho_{Material} \quad < \quad \rho_{Metall} \tag{7}$$

Dadurch wird das Material durch die Auftriebskraft gezielt an der Phasengrenze Schlacke-Metall plaziert. Dabei löst er sich in dem Metallbad, wodurch das Badgewicht steigt.

Durch Kalkstein wird bei der thermischen Zersetzung $CO_2$ erzeugt, das das Schäumen unterstützt, während Kalziumoxid sich in der Schlacke löst und die Viskosität und die Basizität der Schlacke anhebt. Zusätzlich kann die Schlackenviskosität auch durch die Zugabe von Flussspat ($CaF_2$) eingestellt werden.

Der erfindungsgemäße Schaumbildner besteht aus Grundbestandteilen, wie

* Eisenoxiden ($Fe_2O_3$, $Fe_3O_4$) in jeder Form als Zunder, Konverter oder EAF/LF Trockenstaub, Konverter Nassstaub (Schlamm), Erz
* Koks, Graphit, Kohlenstoff (C)
* Ballastmaterial für alle rostfreien Stahlsorten in Form von FeCr, ferritischem Schrott
* Ballastmaterial für rostfreie austenitische und Duplex Stahlsorten in Form von FeCr, ferritischem Schrott, austenitischem Schrott,

Duplexschrott, Nickeloxiden ($NiO_x$).
Kalkstein ($CaCO_3$)

Zu den Zusatzstoffen gehören:

* Kalk und Flussspat (CaO und $CaF_2$)
* Al-Oxide ($Al_2O_3$).

Als Bindemittel:

* Melasse
* Zement
* oder andere mögliche Binder.

Die Zusammensetzung des Schaumbildners lässt sich in % wie folgt angeben:

| | |
|---|---|
| $Fe_2O_3$, $Fe_3O_4$ | 10 - 70 |
| C | 2-16 |
| Balast material | 14 - 78 |
| CaO, $CaF_2$ | 0 - 10 |
| $Al_2O_3$ | 0 - 10. |

Die nachfolgenden Annahmen dienen zur Bestimmung der spez. Dichte des Schaumbildners, wobei $Fe_2O_{3,m}$ verstanden wird als Mischung von $Fe_2O_3$ mit Graphit

* Die spez. Dichte des $Fe_2O_{3,m}$ wird durch die Formel angegeben:

$$\rho_{Fe_2O_{3,m}} = \rho_{Fe_2O_3} \cdot \frac{\%_{Fe_2O_3}}{100\%} + \rho_C \cdot \frac{\%_C}{100\%} \tag{8}$$

die des Schaumbildners :

$$\rho = \rho_{Fe_2O_3,m} \cdot \frac{\%_{Fe_2O_3,m}}{100\%} + \rho_{Balast} \cdot \frac{\%_{Balast}}{100\%} + \rho_{CaCO_3} \cdot \frac{\%_{CaCO_3}}{100\%} + \rho_{Binders} \frac{\%_{Binder}}{100\%} \qquad (9)$$

wobei Ballast bedeutet FeCr oder Schrott sowie Nickeloxid

$$\%_{Fe_2O_3,m} + \%_{Balast} + \%_{CaCO_3} + \%_{Binder} = 100\% \qquad (10)$$

Die spez. Dichte des Schaumbildners ergibt sich aus der nachfolgenden Tabelle1.

## Tabelle 1

### Spez. Dichte der reinen, monolithischen Schaumbildnerkomponenten, die für die Dichtebestimmung des Materials benutzt werden

| Komponente | Fe | Cr | Fe$_2$O$_3$ | C | CaCO$_3$ | CaF$_2$ | FeCr (*) |
|---|---|---|---|---|---|---|---|
| Spez. Dichte, [t/m$^3$] | 7.86 | 7.2 | 5.3 | 2.25 | 2.27 | 3.18 | 4.09 |

* 54%Cr-35%Fe-8%C-3%Si

| Komponente | Melasse | Zement | ferrit. Schrott | NiOx | | | |
|---|---|---|---|---|---|---|---|
| Spez. Dichte, [t/m$^3$] | 0,99 | 2,9 | 6,51 | 6,67 | | | |

Die angegebenen Daten für die spez. Dichte beziehen sich auf monolithisches Material. Andererseits wird das zur Schaumbildung benutzte Material in Form von Briketts angewandt, dessen spez. Dichte natürlich geringer ist.

Die Briketts werden durch Pressen des Materials hergestellt, abhängig von der prozentualen Zusammensetzung werden unterschiedliche Dichten erhalten.

Die spez. Dichte von bei der Stahlherstellung erzeugten Schlacken liegt im

Bereich von 2,5 bis 3 g/cm$^3$.

Eine gepresste Zusammensetzung die Fe$_2$O$_3$ und Kohlenstoff in dem genannten Gemisch enthält, hat in der Praxis eine Dichte von 3,2 g/cm$^{3,}$, während sich rechnerisch für die individuellen Komponenten eine Dichte von 4,7 g/cm$^3$ ergibt. Für die berücksichtigte Schlacke hat sich experimentell eine Dichte von 2,9 g/cm$^3$ ergeben.

Aus Sicht der gewünschten Schaumbildungseffekte sollte die spez. Diche des Schaumbildners in einem Berich von 2,8-6,0 t/m$^3$ liegen.

Bei geringen physikalischen Abmessungen für die Zusätze (Pellets oder Briketts) wird das Gas schnell freigesetzt, da die Reaktionsfläche insgesamt bei kleineren Abmessungen größer ist.

Es wurde bereits dargelegt, dass die schaumbildende Mischung in Form von Briketts oder Pellets zugegeben werden sollte. Dabei werden die Briketts in einer besonders gestalteten Presse erzeugt. Als vorteilhaft haben sich für die Briketts Abmessungen ergeben, die für die Diagonale bei 20-100 mm und die Höhe bei 15-40 mm liegen.

Die Pellets oder Briketts können vor dem Pressen in einer Trommel unter Zugabe von Melasse oder Zement hergestellt werden, wobei aber auch andere Bindetechniken möglich sind,die sicherstellen, dass die gewünschten Eigenschaften hinsichtlich Härte, Bruch- und Druckfestigkeit erreicht werden.

**Patentansprüche**

1. Verfahren zur Erzeugung einer Schaumschlacke auf Rostfreistahlschmelzen in einem Elektrolichtbogenofen, wobei ein Gemisch aus Metalloxiden und Kohlenstoff in den Ofen eingegeben wird, unterhalb der Schlacke, an der Metall-Schlackegrenze, das Metalloxid durch den Kohlenstoff reduziert und Kalkstein thermisch dissonant wird und die entstehenden Gase durch Blasenbildung das Schlackenaufschäumen bewirken,
**dadurch gekennzeichnet,**
**dass** das zu chargierende Gemisch, das in Form von Formteilen, wie Briketts oder Pellets zugegeben wird, enthält als Grundkomponenten aus den Gruppen

   * Eisenoxid ($Fe_2O_3$, $Fe_3O_4$) in jeder Form als Zunder, Konverter oder EAF/LF Trockenstaub, Konverter Nassstaub (Schlamm)
   * Koks, Graphit, Kohlenstoff (C)
   * Ballastmaterial für alle rostfreien Stahlsorten in Form von FeCr, ferritischem Schrott Ballastmaterial für rostfreie austenitische und Duplex Stahlsorten in Form von FeCr, ferritischem Schrott, austenitischem Schrott, Duplex-schrott, Nickeloxiden ($NiO_x$)
   * Kalkstein ($CaCO_3$)

   optional:

   * Kalk oder Flussspat (CaO oder $CaF_2$)
   * Al-Oxide ($Al_2O_3$).

   sowie ein Bindemittel, wie

   * Melasse
   * Zement
   * oder ein anderes Bindemittel.

2. Verfahren nach Anspruch 1,
**dadurch gekennzeichnet,**
**dass** die Zusammensetzung des Schaumbildners in % wie folgt beträgt:

| | |
|---|---|
| $Fe_2O_3$, $Fe_3O_4$ | 10 - 70 |
| C | 2 - 16 |
| Balast material | 14 - 78 |
| $CaCO_3$ | bis zu 10 |
| CaO, $CaF_2$ | 0 - 10 |
| $Al_2O_3$ | 0 - 10 |

3. Verfahren nach einem der vorstehenden Ansprüche,
**dadurch gekennzeichnet,**
**dass** die spez. Dichte der Formteile durch die Wahl der das Gemisch bildenden Komponenten bei der Herstellung der Formteile auf 2,8 bis 6,0 $t/m^3$ eingestellt wird.

4. Verfahren nach einem der vorstehenden Ansprüche,
**dadurch gekennzeichnet,**
**dass** bei der Herstellung der Formteile in Form von Briketts deren diagonale Erstreckung zwischen 20 und 100 mm und deren Höhe zwischen 15 bis 40 mm liegt.

**Claims**

1. Process for producing a foamed slag on stainless steel melts in an electric arc furnace, wherein the furnace is charged with a mixture of metal oxides and carbon and, below the slag at the metal-slag interface, the metal oxide is reduced by the carbon and limestone becomes thermally discordant, and the occurring gases cause the slag to foam due to the formation of bubbles, **characterised in that** the charge mixture which is added in the form of moulded articles such as briquettes or pellets contains as base components from the following groups:

- iron oxide ($Fe_2O_3$, $Fe_3O_4$) in any form as cinder, dry converter dust or dry EAF/LF dust, wet converter dust (sludge)
- coke, graphite, carbon (C)
- ballast material for all stainless steel types in the form of FeCr, ferritic scrap
- ballast material for stainless austenitic and duplex steel types in the form of FeCr, ferritic scrap, austenitic scrap, duplex scrap, nickel oxides ($NiO_x$)
- limestone ($CaCO_3$)

and, optionally,

* quicklime or fluorite (CaO or $CaF_2$)
* aluminum oxide ($Al_2O_3$)

and binders such as:

* molasses
* cement
* or another binder.

2. Process according to claim 1, **characterised in that** the composition of the foamer in percent is as follows:

| | |
|---|---|
| $Fe_2O_3$, $Fe_3O_4$ | 10 - 70 |
| C | 2 - 16 |
| ballast material | 14 - 78 |
| $CaCO_3$ | up to 10 |
| CaO, $CaF_2$ | 0 - 10 |
| $Al_2O_3$ | 0 - 10. |

3. Process according to one of the preceding claims, **characterised in that** the specific density of the molded articles is adjusted to $2.8\,t/m^3$ to $6.0\,t/m^3$ by selecting the components forming the mixture when producing the molded articles.

4. Process according to one of the preceding claims, **characterised in that** when producing the moulded articles in the form of briquettes, their diagonal length is between 20 mm and 100 mm and their height is between 15 mm to 40 mm.

**Revendications**

1. Procédé pour la production d'un laitier mousseux sur des aciers liquides inoxydables dans un four à arc électrique, dans lequel on introduit dans le four un mélange d'oxydes métalliques et de carbone, en dessous du laitier, à l'interface métal-laitier, on réduit l'oxyde métallique via le carbone et on rend le carbonate de calcium dissonant par voie thermique, les gaz qui se forment donnant lieu à la transformation du laitier en mousse via la formation de bulles, **caractérisé en ce que** le mélange à charger, que l'on ajoute sous la forme d'éléments moulés tels que des briquettes ou des granulés, contient :

à titre de composants de base, ceux choisis parmi les groupes comprenant :

* de l'oxyde de fer ($Fe_2O_3$, $Fe_3O_4$) sous n'importe quelle forme, comme sous la forme de poussière sèche de détonateur, de convertisseur ou de four à arc/four-poche (EAF/LF), sous la forme de poussière humide de convertisseur (boues) ;
* du coke, du graphite, du carbone (C) ;
* des matières de ballast pour tous les types d'aciers inoxydables, sous la forme de FeCr, de riblons ferritiques ; des matières de ballast pour des types d'aciers inoxydables duplex et austénitiques, sous la forme de FeCr, de riblons ferritiques, de riblons austénitiques, de riblons duplex, d'oxydes de nickel ($NiO_x$) ;

* du carbonate de calcium ($CaCO_3$) ;

à titre facultatif :

* de la chaux ou du feldspath (CaO ou $CaF_2$) ;
* des oxydes d'aluminium ($Al_2O_3$) ;

ainsi qu'un liant tel que :

* la mélasse ;
* le ciment ;
* ou un autre liant.

2. Procédé selon la revendication 1, **caractérisé en ce que** la composition de l'agent moussant en % est telle qu'indiquée ci-après :

| | |
|---|---|
| $Fe_2O_3$, $Fe_3O_4$ | 10 - 70 |
| C | 2 - 16 |
| Matière de ballast | 14 - 78 |
| $CaCO_3$ | jusqu'à 10 |
| CaO, $CaF_2$ | 0 - 10 |
| $Al_2O_3$ | 0 - 10. |

3. Procédé selon l'une quelconque des revendications précédentes, **caractérisé en ce qu'**on règle la masse volumique des éléments moulés à une valeur de 2, 8 à 6,0 t/m$^3$ par la sélection des composants formant le mélange lors de la fabrication des éléments moulés.

4. Procédé selon l'une quelconque des revendications précédentes, **caractérisé en ce que**, lors de la fabrication des éléments moulés sous la forme de briquettes, leur étendue se situe entre 20 et 100 mm et leur hauteur se situe entre 15 et 40 mm.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1629126 A